# EUROPÄISCHE PATENTSCHRIFT

(11) **EP 2 647 067 B1**
(45) Veröffentlichungstag und Bekanntmachung des Hinweises auf die Patenterteilung: **08.04.2015**
(21) Anmeldenummer: 11788794.3
(22) Anmeldetag: 21.11.2011
(51) Int. Cl.: H01M 2/20, H01M 2/30, C25D 7/00

(54) **AKKUMULATORZELLE MIT BESCHICHTETEM TERMINAL**
ACCUMULATOR WITH COATED TERMINAL
ACCUMULATORS AVEC BORNE REVÊTUE

(30) Priorität: 30.11.2010 DE 102010062183
(43) Veröffentlichungstag der Anmeldung: 09.10.2013
(73) Patentinhaber: Robert Bosch GmbH, 70442 Stuttgart (DE); SAMSUNG SDI CO., LTD., Yongin-si, Gyeonggi-do 446-577 (KR)
(72) Erfinder: WOEHRLE, Thomas, 80807 Munich (DE); FETZER, Joachim, 73342 Bad-Ditzenbach (DE); LEUTHNER, Stephan, 71229 Leonberg (DE); FINK, Holger, 70567 Stuttgart (DE)
(74) Vertreter: Bee, Joachim
(86) Internationale Anmeldenummer: PCT/EP2011/070545
(87) Internationale Veröffentlichungsnummer: WO 2012/072437

(56) Entgegenhaltungen:
- WO-A1-98/07203
- WO-A1-2011/122181
- JP-A- 2004 039 651
- JP-A- 2009 117 345

## Beschreibung

Die vorliegende Erfindung betrifft eine Akkumulatorzelle mit zwei Terminals, einen Akkumulator mit mindestens zwei Akkumulatorzellen sowie ein Kraftfahrzeug mit einem elektrischen Antriebsmotor zum Antreiben des Kraftfahrzeugs und einen mit dem elektrischen Antriebsmotor verbundenen oder verbindbaren Akkumulator.

### Stand der Technik

Lithium-Ionen-Zellen besitzen mindestens eine positive und eine negative Elektrode (Kathode bzw. Anode), die Lithium-Ionen (Li+) reversibel ein-(Interkalation) oder wieder auslagern (Deinterkalation) kann. Die Begriffe Lithium-Ionen-Zelle, Lithium-Ionen-Polymer-Zelle, Lithium-Ionen-Zelle, -Batterie, -Akkumulator und -System werden weitgehend synonym benutzt.

An Lithium-Ionen-Akkumulatoren werden hohe Anforderungen, insbesondere im automotiven Bereich bezüglich der gravimetrischen Energiedichte (angegeben in Wh/kg) gestellt, um beispielsweise möglicht hohe Reichweiten von mit Elektromotoren angetriebenen Fahrzeugen zu erzielen. Die Nenn-Kapazität einer Lithium-Ionen-Zelle wird von den so genannten Aktivmaterialien bestimmt. Allerdings sind in jeder Lithium-Ionen-Zelle noch so genannte Passivmaterialien oder "Totmaterialien" vorhanden, die damit Einfluss auf die Energiedichte der Lithium-Ionen-Zelle haben. Dazu gehören beispielsweise elektrisches Leitmaterial, Elektrodenbinder, Separatoren, Ableiterfolien, Kollektoren, Terminals und das Gehäuse der Zelle bzw. des Akkumulators selbst.

Terminals dienen dazu, den Stromfluss aus und in die Lithium-Ionen-Zelle zu gewährleisten.

Der Aufbau einer Lithium-Ionen-Zelle mit Ableitern, Kollektoren und den äußeren Terminals ist beispielhaft in der US 20080107961A1 beschrieben.

Üblicherweise werden in Lithium-Ionen-Zellen für die positive Elektrodenseite aluminiumbasierte Terminals verwendet. Auf der negativen Elektrodenseite werden Kupfer, Nickel oder vernickeltes Kupfer eingesetzt, da es bei Verwendung von Aluminium auf der negativen Seite aufgrund des gegebenen Potentials sonst zur Legierung von Lithium und Aluminium kommen würde.

Da die beiden Terminals einer Lithium-Ionen-Zelle aus unterschiedlichen Materialien bestehen, ergeben sich bei der Assemblierung von Lithium-Ionen-Zellen zu größeren Einheiten Metallkombinationen, die bei der Verarbeitung zu Schwierigkeiten führen können. So lässt sich beispielsweise Aluminium mit Kupfer oder Aluminium mit Edelstahl nur sehr schwierig mittels Schweißen verbinden. Zudem kommt es bei den üblichen mechanischen Belastungen im Betrieb, wie beispielsweise Oszillation, zum Lösen von Verbindungen, so dass das gesamte Lithium-Ionen-System ausfällt.

Akkumulatorzellen, die ein mit Gold und/oder ein mit Nickel oberflächenveredeltes Terminal aufweisen, sind aus der US 2006/0292442 A1 bekannt. Die Oberflächenveredelung erfolgt zur Verbesserung der Leitfähigkeit und der Korrosionsbeständigkeit der Terminals.

Ein Batteriepack, das über mit Nickel und Gold versehene Anschlüsse verfügt, ist in der WO 98/07203 A1 beschrieben. Die JP 2004 039651 A1 zeigt eine Batterie, die über mit Nickel beschichtete Terminals aufweist.

### Offenbarung der Erfindung

Es wird erfindungsgemäß eine Akkumulatorzelle, vorzugsweise eine Lithium-Ionen-Zelle bereitgestellt, die einen üblichen Aufbau mit zwei Terminals besitzt, wobei ein Terminal mit einer Beschichtung aus einem Metall versehen ist, das mit dem Metall, aus dem das zweite Terminal besteht, identisch ist

Die erfindungsgemäße Zelle bietet den Vorteil, dass bei der Assemblierung bzw. Ankontaktierung der Terminals die beim genannten Stand der Technik auftretenden Nachteile vermieden werden können. Zudem können bei entsprechender Kombination der verschiedenen Metalle bei der Konfektionierung der Terminals Gewichtseinsparungen erzielt werden, die die Energiedichte der Akkumulatorzellen erhöhen.

Die Beschichtung des Terminals besteht vorzugsweise aus Kupfer, Nickel, Edelstahl oder Aluminium.

Es sind natürlich auch andere Metalle wie Gold, Silber und dergleichen a priori geeignet, jedoch sind diese aus Kostengründen nicht bevorzugt.

Gegenstand der Erfindung ist zudem ein Akkumulator mit mindestens zwei Akkumulatorzellen, wobei die Ankontaktierung der Terminals der mindestens zwei Akkumulatorzellen zur Ausbildung des Akkumulators durch das für die Beschichtung verwendete Metall erfolgt, so dass vorteilhafterweise eine ausreichende Stabilität gegenüber mechanischen Belastungen gewährleistet ist.

Ein Kraftfahrzeug mit einem elektrischen Antriebsmotor zum Antreiben des Kraftfahrzeugs und einem mit dem elektrischen Antriebsmotor verbundenen oder verbindbaren Akkumulator mit erfindungsgemäßen Akkumulatorzellen wird ebenfalls beansprucht.

Die Beschichtung des Terminals umgibt dieses vollständig, wobei zwar einerseits eine möglichst geringe Dicke der Beschichtung bevorzugt wird, jedoch andererseits eine gewisse Mindestdicke notwendig ist, um beim Schweißen oder Löten bei der Zusammenschaltung der verschiedenen Terminals keine Fehlstellen in der Beschichtung hervorzurufen.

Das beschichtete Terminal kann beispielsweise einen Kern aus Aluminium mit einem Durchmesser von 4970 µm aufweisen, auf den eine Beschichtung mit 15 µm aus Kupfer aufgebracht ist, so dass ein Gesamtdurchmesser von ebenfalls 5000 µm resultiert.

Eine mögliche Kombination der verschiedenen Metalle bei der Assemblierung der erfindungsgemäßen Akkumulatorzelle ist in Tabelle 1 wiedergegeben:

**Tabelle 1**

| Metallisches Basis-Material des Terminals | Beschichtung | Metall-Konnektor, der Zellen bzw. Terminals verbindet |
|---|---|---|
| Aluminium (Plus-Terminal) | Kupfer | Kupfer |
| Kupfer (Minus-Terminal) | (ohne) | Kupfer |

Eine weitere nicht-erfindungsgemäße Ausführungsform ist in Tabelle 2 wiedergegeben.

**Tabelle 2**

| Metallisches Basis-Material des Terminals | Beschichtung | Metall-Konnektor, der Zellen bzw. Terminals verbindet |
|---|---|---|
| Aluminium (Plus-Terminal) | Edelstahl | Edelstahl |
| Kupfer (Minus-Terminal) | Edelstahl | Edelstahl |

Andere Dimensionierungen der Terminals, der Beschichtung sowie des beschichteten Terminals und andere Kombinationen der Metalle sind im Rahmen der Erfindung möglich.

Das entsprechende Terminal bzw. die Terminals für die erfindungsgemäße Akkumulatorzelle werden konfektioniert durch das Aufbringen einer dünnen Metallschicht auf ein herkömmliches Terminal oder ein Terminal mit einem angepassten Durchmesser.

Das entsprechende Terminal für die erfindungsgemäße Akkumulatorzelle wird konfektioniert durch das Aufbringen einer dünnen Metallschicht auf ein herkömmliches Terminal oder ein Terminal mit einem angepassten Durchmesser.

Das Aufbringen der Beschichtung erfolgt vorzugsweise entweder
a) galvanisch,
b) mittels Sputtern oder
c) mittels Ionenstrahlbeschichtung.

Bei allen Verfahren ist zu gewährleisten, dass die aufgebrachte Schicht keinerlei Defekte aufweist.

Besonders gute Ergebnisse werden mit Lithium-Ionen-Zellen mit Terminals erzielt, welche mittels Ionenstrahlbeschichtung beschichtet wurden.

Erfindungsgemäße assemblierte Lithium-Ionen-Zellen mit diesen Terminals zeigen gleiche elektrische Performance (wie beispielsweise Innenwiderstand) und identisches Verhalten bei Langzeit-Zyklisierung und -Lagerung wie ein Lithium-Ionen-Referenz-System mit herkömmlichen Terminals. Beispielsweise war eine Ablösung der metallischen Beschichtung auf dem Terminal während des Lagerns oder des Betreibens des assemblierten Lithium-Ionen-Systems a priori nicht auszuschließen gewesen, was einen sehr negativen Einfluss auf die elektrochemische Performance gehabt hätte.

Überraschenderweise zeigte sich gerade bei mechanischen Tests (beispielsweise Schütteltests), dass erfindungsgemäße Lithium-Ionen-Systeme mit beschichteten Terminals besser als das Referenzsystem abschneiden; beispielsweise ist der Innenwiderstand beim erfindungsgemäßen System nach mechanischen Tests nicht so stark angestiegen wie beim herkömmlichen Referenzsystem.

Vorteilhafte Weiterbildungen der Erfindung sind in den Unteransprüchen angegeben und in der Beschreibung beschrieben.

### Zeichnungen

Ausführungsbeispiele der Erfindung werden anhand von Zeichnungen und der nachfolgenden Beschreibung näher erläutert. Es zeigen:
Figur 1 in einer perspektivischen Ansicht ein Terminal einer erfindungsgemäßen Akkumulatorzelle mit einer üblichen räumlichen Ausgestaltung gemäß dem Stand der Technik (US 20080107961 A1), und
Figur 2 schematisch eine Assemblierung von erfindungsgemäßen Akkumulatorzellen.

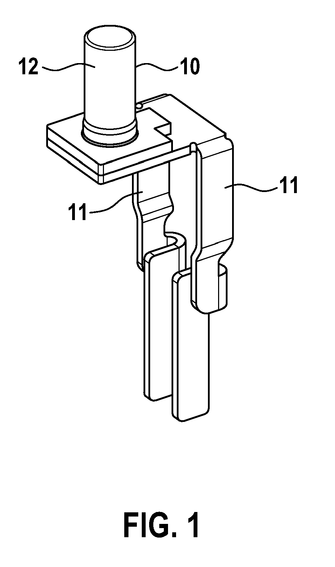

In Figur 1 ist ein Terminal 10 für eine nicht dargestellte erfindungsgemäße Akkumulatorzelle offenbart, die mit einem Kollektor 11 verbunden ist. Das Terminal 10 ist vollständig mit einer Beschichtung 12 aus einem Metall versehen, das bei einer Assemblierung von Akkumulatorzellen zu größeren Einheiten als Konnektor verwendet wird.

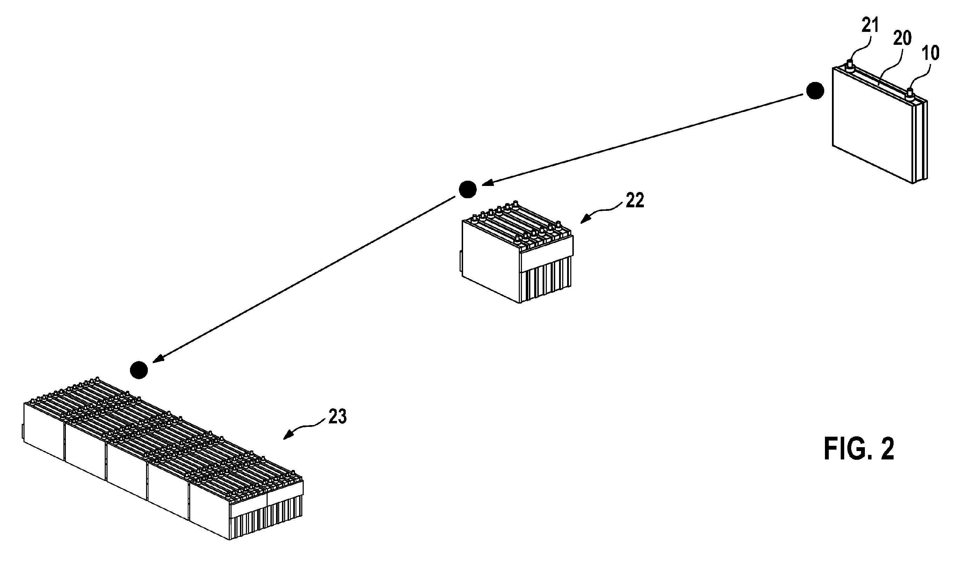

Figur 2 zeigt die Assemblierung von erfindungsgemäßen Akkumulatorzellen 20 mit zwei Terminals 10 und 21, wobei ein Terminal 10 erfindungsgemäß mit einer Beschichtung 12 versehen ist. Mehrere Akkumulatorzellen 20 können zu einem Akkumulatormodul 22 und dieses zu einem Akkumulator-Pack 23 zusammengefasst werden, wobei jeweils eine entsprechende Kontaktierung der Terminals 10 und 21 erfolgt.

## Patentansprüche

1. Eine Akkumulatorzelle mit zwei Terminals (10, 21), **dadurch gekennzeichnet, dass** ein Terminal (10) mit einer Beschichtung (12) aus einem Metall versehen ist, das mit dem Metall, aus dem das zweite Terminal (21) besteht, identisch ist.

2. Die Akkumulatorzelle nach Anspruch 1, wobei die Akkumulatorzelle (20) eine Lithium-Ionen-Zelle ist.

3. Die Akkumulatorzelle nach Anspruch 1 oder 2, wobei die Beschichtung (12) aus Kupfer, Nickel, Edelstahl oder Aluminium besteht.

4. Die Akkumulatorzelle nach einem der Ansprüche 1 bis 3, wobei die Beschichtung (12) galvanisch aufgebracht ist.

5. Die Akkumulatorzelle nach einem der Ansprüche 1 bis 3, wobei die Beschichtung (12) mittels Sputtern aufgebracht ist.

6. Die Akkumulatorzelle nach einem der Ansprüche 1 bis 3, wobei die Beschichtung (12) mittels Ionenstrahlbeschichtung aufgebracht ist.

7. Ein Akkumulator mit mindestens zwei Akkumulatorzellen (20) nach einem der Ansprüche 1 bis 6, wobei die Kontaktierung der Terminals (10, 21) der mindestens zwei Akkumulatorzellen (20) zur Ausbildung des Akkumulators durch das für die Beschichtung (12) verwendete Metall gegeben ist.

8. Ein Kraftfahrzeug mit einem elektrischen Antriebsmotor zum Antreiben des Kraftfahrzeugs und einem mit dem elektrischen Antriebsmotor verbundenen oder verbindbaren Akkumulator gemäß Anspruch 7.

## Claims

1. Accumulator cell with two terminals (10, 21), **characterized in that** one terminal (10) is provided with a coating (12) which is composted of a metal which is identical to the metal from which the second terminal (21) is composed.

2. Accumulator cell according to Claim 1, wherein the accumulator cell (20) is a lithium-ion cell.

3. Accumulator cell according to Claim 1 or 2, wherein the coating (12) is composed of copper, nickel, stainless steel or aluminum.

4. Accumulator cell according to one of Claims 1 to 3, wherein the coating (12) is applied by electroplating.

5. Accumulator cell according to one of Claims 1 to 3, wherein the coating (12) is applied by means of sputtering.

6. Accumulator cell according to one of Claims 1 to 3, wherein the coating (12) is applied by means of ion beam coating.

7. Accumulator having at least two accumulator cells (20) according to one of Claims 1 to 6, wherein contact is made with the terminals (10, 21) of the at least two accumulator cells (20) for forming the accumulator by the metal which is used for the coating (12).

8. Motor vehicle having an electric drive motor for driving the motor vehicle and having an accumulator according to Claim 7 which is connected or can be connected to the electric drive motor.

## Revendications

1. Cellule d'accumulateur avec deux bornes (10, 21), **caractérisée en ce qu'**une borne (10) est munie d'un revêtement (12) en un métal, qui est identique au métal dont la deuxième borne (21) est constituée.

2. Cellule d'accumulateur selon la revendication 1, dans laquelle la cellule d'accumulateur (20) est une cellule lithium-ions.

3. Cellule d'accumulateur selon la revendication 1 ou 2, dans laquelle le revêtement (12) se compose de cuivre, de nickel, d'acier allié ou d'aluminium.

4. Cellule d'accumulateur selon l'une quelconque des revendications 1 à 3, dans laquelle le revêtement (12) est déposé par voie galvanique.

5. Cellule d'accumulateur selon l'une quelconque des revendications 1 à 3, dans laquelle le revêtement (12) est déposé par pulvérisation cathodique.

6. Cellule d'accumulateur selon l'une quelconque des revendications 1 à 3, dans laquelle le revêtement (12) est déposé par revêtement par faisceau ionique.

7. Accumulateur comportant au moins deux cellules d'accumulateur (20) selon l'une quelconque des revendications 1 à 6, dans lequel la mise en contact des bornes (10, 21) desdites au moins deux cellules d'accumulateur (20) pour réaliser l'accumulateur est assurée par le métal utilisé pour le revêtement (12).

8. Véhicule automobile équipé d'un monteur électrique d'entraînement pour l'entraînement du véhicule automobile et d'un accumulateur selon la revendication 7, qui est ou peut être raccordé au moteur électrique d'entraînement.
